# EUROPEAN PATENT SPECIFICATION

(11) **EP 1 610 033 B1**
(45) Date of publication and mention of the grant of the patent: **14.07.2010**
(21) Application number: 03715600.7
(22) Date of filing: 28.03.2003
(51) Int. Cl.: F16H 25/14

(54) **MECHANISM FOR CONVERTING ROTARY TO SWING MOTION**
ROTATIONS-/OSZILLATIONSUMWANDLUNGSMECHANISMUS
MECANISME DE CONVERSION ROTATION EN OSCILLATION

(43) Date of publication of application: 28.12.2005
(73) Proprietor: Techno Science Co., Ltd., Saitama-shi, Saitama 330-0802 (JP)
(72) Inventor: KAWAAI, Osamu, Suginami-ku, Tokyo 168-0073 (JP)
(74) Representative: Fenlon, Christine Lesley
(86) International application number: PCT/JP2003/003982
(87) International publication number: WO 2004/088172

(56) References cited:
- FR-A- 804 866
- FR-A- 2 515 766
- GB-A- 2 232 452
- JP-B1- 44 010 585
- JP-B1- 46 036 141
- JP-U- 52 042 983

## Description

### FIELD OF THE INVENTION

The present invention relates to mechanisms for converting rotary motion to swing motion and vice versa.

### BACKGROUND OF THE INVENTION

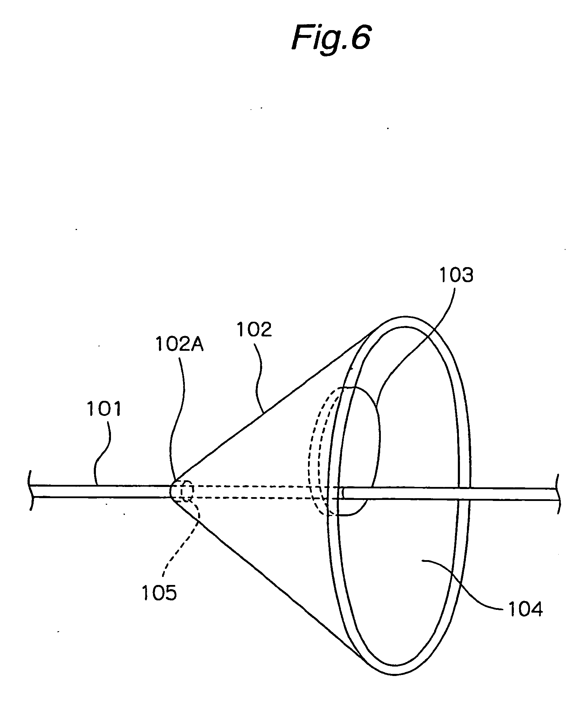

It is well known to provide various machines with mechanisms for converting rotary motion to swing motion and vice versa. One such example is shown in Fig. 6. Specifically, a conventional mechanism 100 includes a rotary shaft 101, a pivot element 102 and an ellipsoidal plate 103. Continuous rotary motion of the rotary shaft 101 is converted to swing motion of the pivot element 102. The pivot element 102 is conical and has an inner surface 104 of an ellipsoidal section. The pivot element 102 has a tip 102A at which the pivot element 102 is mounted to the rotary shaft 101 through a bearing assembly 105. With this arrangement, the rotary shaft 101 is rotated about its own axis, and the pivot element 102 is pivotable with respect to the rotary shaft 101. The pivot element 102 has a central axis which is coaxial with the axis of the rotary shaft 101 when the pivot element 102 is in its neutral position. The central axis of the pivot element 102 is inclined relative to the rotary shaft 101 during swing motion. The ellipsoidal plate 103 is fixedly mounted to the rotary shaft 101 at a point offset from the center of the ellipsoidal plate 103.

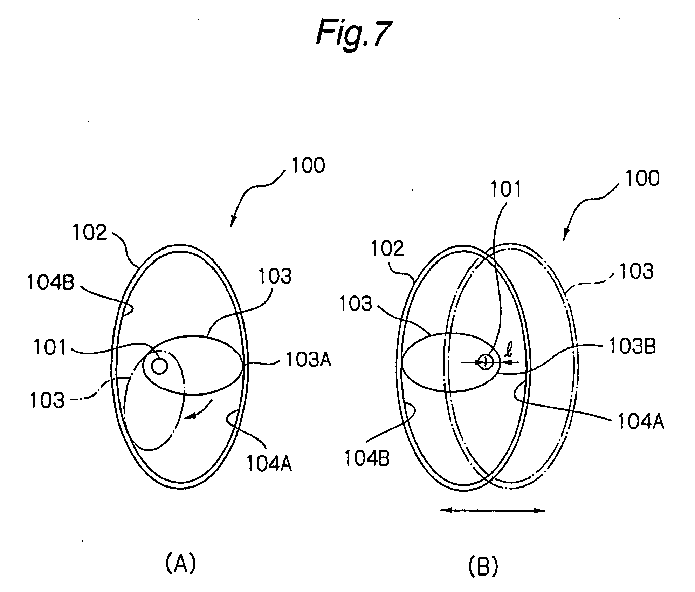

Fig. 7 illustrates operation of the mechanism 100. The ellipsoidal plate 103 has a longitudinal end 103A. The pivot element 102 has a right sidewall 104A and a left sidewall 104B. When the rotary shaft 101 is in its initial position as shown in Fig. 7A, the pivot element 102 is in its rightmost position wherein the longitudinal end 103A of the ellipsoidal plate 103 is placed in contact with the right sidewall of the pivot element 102. When the rotary shaft 101 is rotated in a clockwise direction, the ellipsoidal element 103 is rotated in the direction of the arrow in Fig. 7A and then, brought into contact with the left sidewall 104B of the pivot element 102 as shown by dash-and-dot line in Fig. 7A.

Further rotation of the rotary shaft 101 causes the ellipsoidal plate 103 to urge the pivot element 102 in a leftward direction. The pivot element 102 is then moved into its leftmost position as shown by solid line in Fig. 7B. Thereafter, the ellipsoidal plate 103 again comes into contact with the right sidewall 104A of the pivot element 102 and urges the pivot element 102 in a rightward direction. As described, the pivot element 102 can be pivotably moved between the rightmost position, as shown by dash-and-dot line in Fig. 7B and the leftmost position, as shown by solid line in Fig. 7B during continuous rotation of the rotary shaft 101.

The prior art mechanism 100 suffers from the following problems. Firstly, the ellipsoidal plate 103 is located between the rotary shaft 101 and the pivot element 102. This arrangement makes it difficult for the pivot element 102 to rotate through a sufficient range of swing motion. To rotate the ellipsoidal plate 103 about the rotary shaft 101 in a well-balanced manner, the axis of the rotary shaft 101 must be separated a sufficient distance 1 (see Fig. 7B) from the end 103B of the ellipsoidal plate 103. There is thus a limitation on the range of swing motion of the pivot element 102.

Secondly, rotary motion of the rotary shaft 101 can only partly be converted to swing motion of the pivot element 102. For example, the ellipsoidal plate 103 is kept out of contact with the inner sidewall of the pivot element 102 when the ellipsoidal plate 103 is moved between the position shown by solid line in Fig. 7A and the position shown by dash-and-dot line in Fig. 7A. During this movement of the ellipsoidal plate 102, no rotary motion is converted to swing motion of the pivot element 102. The mechanism 100 is thus unable to effectively convert rotary motion to swing motion.

It is, therefore, an object of the present invention to provide a mechanism which is simple in structure and can convert rotary motion to a wide range of swing motion. It is another object of the present invention to provide a mechanism which allows effective conversion between rotary motion and swing motion.

GB2232452A, which constitutes the closest prior art, discloses a mechanism for converting oscillating motion of a crank shaft to rotary motion of an inclined crank via a universal joint wobble bearing block, and comprises the features of the preamble of independent claim 1.

FR804866 discloses a mechanism for converting rotation of a hand-cranked horizontal shaft to oscillating motion of a vertical shaft by a clevis which is pivotably mounted to the vertical shaft and rotatably mounted to an arm of the horizontal shaft.

### SUMMARY OF THE INVENTION

The present invention provides a mechanism for converting rotary motion to swing motion, having the features of claim 1 below. With this arrangement, the slant section of the rotary shaft is rotated about the central axis of the rotary shaft during rotation of the rotary shaft. The slant section is brought into contact with a selected one of the confronting surfaces of the swing element in response to the direction of rotation of the rotary shaft. As a result of this contact, the swing element is inclined from its upright position. The swing element is pivotably moved in alternate directions during rotation of the rotary shaft. Also, the pivot shaft is pivotally moved with the swing element. The present invention can convert rotary motion to swing motion with such a simple structure.

In one embodiment, the pivot shaft is located in a side-by-side relation to the proximal end of the slant section and extends in a direction perpendicular to the central axis of the rotary shaft. By this arrangement, the angle of inclination of the slant section of the rotary shaft determines the range of swing motion of the swing element (as well as the range of pivotal motion of the pivot shaft). This range can readily be changed by increasing or decreasing the angle of inclination of the slant section. This configuration also allows the swing element to be rotated through a wider range of swing motion.

In one embodiment, the two confronting surfaces of the swing element are spaced a slight distance from the slant section of the rotary shaft. This configuration permits the slant section to be held in contact with the confronting surfaces during a substantial part of movement of the rotary shaft and thus, provides effective conversion between rotary and swing motion without any transmission loss.

In another embodiment, the confronting surfaces of the swing element extend generally parallel to the slant section of the rotary shaft. This results in an increase in the contact surface area between the slant section and the confronting surfaces. Such an increased contact surface area ensures constant pivotal movement of the swing element and thus, stable conversion between rotary motion and swing motion.

In one embodiment, the swing element has a U-shaped section and includes a pair of confronting sidewalls in the form of a plate and a bottom wall connected to the lower end of the confronting sidewalls. The bottom wall has an opening through which the slant section of the rotary shaft is inserted between the confronting sidewalls of the swing element.

The opening is defined substantially centrally in the bottom wall of the swing element.

The bottom wall of the swing element extend in a direction perpendicular to the central axis of the rotary shaft.

The pivot shaft and a support shaft cooperatively support opposite sides of the bottom wall of the swing element. The support shaft extends in a substantially coaxial relation to the pivot shaft.

The pivot shaft and the support shaft are secured within the bottom wall of the swing element.

### BRIEF DESCRIPTION OF THE DRAWINGS

Fig. 1 is a front view of a mechanism for converting rotary motion to swing motion, made according to one embodiment of the present invention and secured to a motor;
Fig. 2 is a side view of the mechanism with a swing element in its neutral position;
Fig. 3 is a view similar to that of Fig. 2, showing that the swing element is rotated through a full range of swing motion;
Fig. 4A is a perspective view of the mechanism, with the swing element pivoted to its leftmost position;
Fig. 4B is a view similar to that of Fig. 4A, but with the swing element held in its neutral position;
Fig. 4C is a view similar to that of Fig. 4A, but with the swing element pivoted to its rightmost position;
Fig. 5A is a top plan view of the mechanism, with the swing element pivoted to its leftmost position;
Fig. 5B is a view similar to that of Fig. 5A, but with the swing element held in its neutral position;
Fig. 5C is a view similar to that of Fig. 5A, but with the swing element pivoted to its rightmost position;
Fig. 6 is a perspective view of a conventional mechanism for converting rotary motion to swing motion; and
Figs. 7A and 7B are sectional views of the conventional mechanism.

### PREFERRED MODES FOR CARRYING OUT THE INVENTION

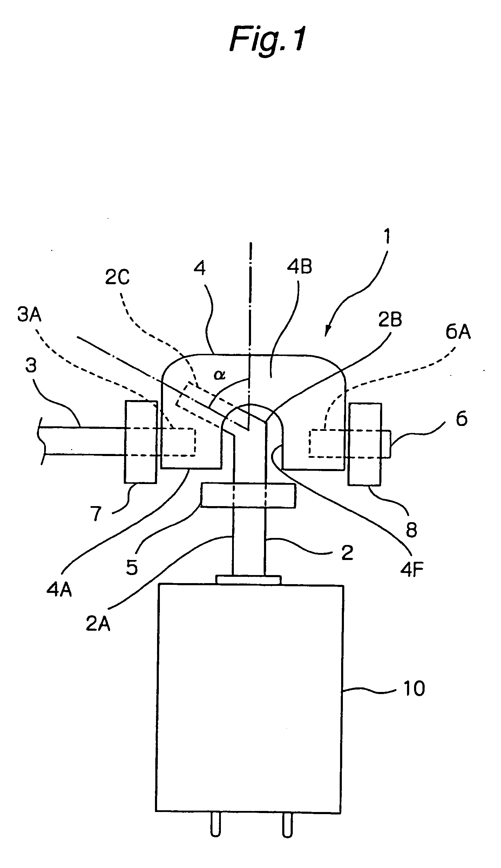

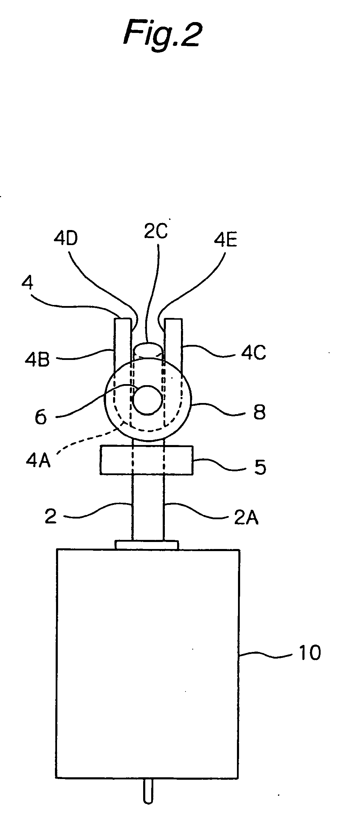

Figs. 1 to 3 illustrate a mechanism 1 for converting rotary motion to swing motion, made according to one embodiment of the present invention. As shown, the mechanism 1 generally includes a rotary shaft 2 rotatable about its central axis, a pivot shaft 3 pivotable about its axis, and a swing element 4 through which the rotary shaft 2 and the pivot shaft 3 are interconnected.

The rotary shaft 2 has a proximal or upright section 2A extending along the central axis of the rotary shaft 2. The rotary shaft 2 is connected to a motor 10 which in turn, imparts continuous rotary motion to the rotary shaft 2. The upright section 2A is rotatably supported within a housing (not shown) through a bearing assembly 5.

The rotary shaft 2 has a bent 2B and a distal or slant section 2C extending from the upright section 2A through the bent 2B. The slant section 2C is inclined at an angle α to the central axis of the rotary shaft 2.

The swing element 4 has a U-shaped section. The swing element 4 includes a round bottom wall 4A and a pair of confronting plates or sidewalls 4B, 4C extending from the bottom wall 4A in a generally parallel relationship. The slant section 2C of the rotary shaft 2 is located between the two confronting sidewalls 4B, 4C. The distance between the two confronting sidewalls 4B, 4C is slightly greater than the diameter of the rotary shaft 2. The confronting sidewalls 4B, 4C have respective inner surfaces 4D, 4E oriented in a confronting relation to opposite sides of the slant section 2C. An opening 4F is defined substantially centrally in the bottom wall 4A and extends into part of the sidewalls 4B, 4C. The slant section 2C of the rotary shaft 2 extends through the opening 4F and is disposed between the confronting sidewalls 4B, 4C. The confronting inner surfaces 4D, 4E extend parallel to the slant section 2C and are slightly spaced from the slant section 2C.

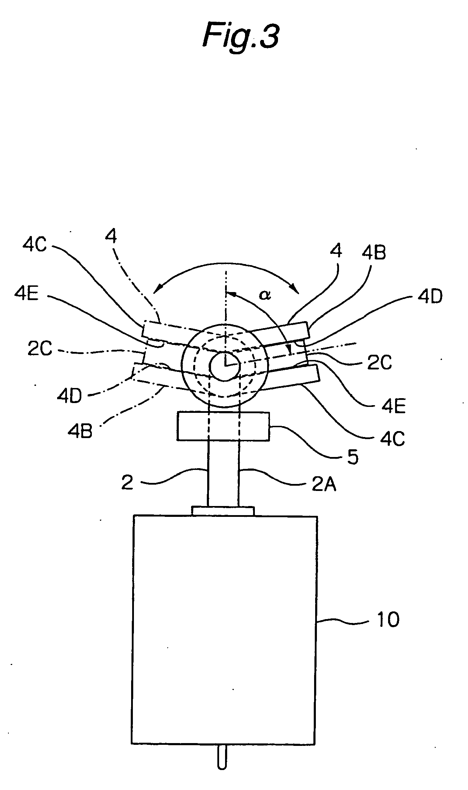

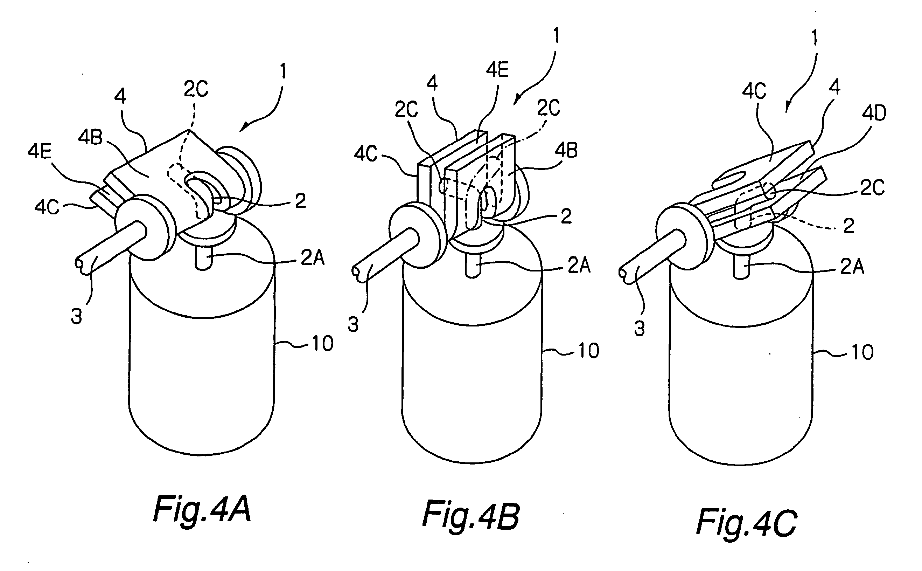

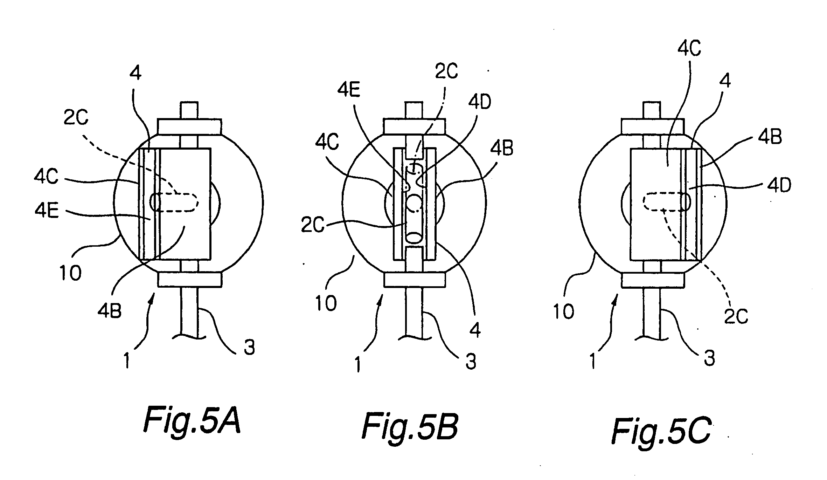

When the rotary shaft 2 is rotated, the slant section 2C comes into contact with one of the confronting inner surfaces 4D, 4E of the swing element 4, as will later be described in more detail with reference to Figs. 4 and 5. Then, the slant section 2C is slidably moved on and along the inner surfaces 4D, 4E. This imparts swing motion to the swing element 4. The swing element 4 is pivoted alternately from its neutral position to opposite sides. The range of pivotal movement of the swing element 4 at each side is equal to the angle a of inclination of the slant section 2C (see Fig. 3). Thus, its range can readily be changed by increasing or decreasing the angle α of inclination of the slant section 2C. Also, this configuration allows the swing element 4 to be rotated through a wider range of swing motion than that of the prior art mechanism. The swing element 4 can be pivoted at any angle between zero and 80 degrees at each side (total range of swing motion is thus 160 degrees). In the illustrated embodiment, the angle of inclination of the slant section 2C is 80 degrees.

The swing element 4 is supported at its opposite ends by the pivot shaft 3 and a support shaft 6 so that the swing element 4 can be pivoted about the axes of the pivot shaft 3 and the support shaft 6. The pivot shaft 3 has an end 3A secured within one end of the bottom wall 4A of the swing element 4. Similarly, the support shaft 6 has an end 6A secured within the other end of the bottom wall 4A of the swing element 4. The pivot shaft 3 faces with and is coaxial with the support shaft 6. The pivot shaft 3 and the support shaft 6 are pivotably supported within the housing (not shown) through respective bearing assemblies 7, 8. The bent 2B (or the proximal end of the slant section 2C) of the rotary shaft 2 is positioned in a side-by-side relationship to the pivot shaft 3 and the support shaft 6. This arrangement permits the swing element 4 to be pivoted at an angle equal to the angle α of inclination of the slant section 2C of the rotary shaft 2.

The pivot shaft 3 is connected, for example, to a working tool (not shown) to be pivoted. The pivot shaft 3 is pivoted at the same angle as the swing element 4. The pivotal movement of the pivot shaft 3 is then transmitted to such a working tool.

Operation of the mechanism 1 will next be described with reference to Figs. 4 and 5.

Figs. 4B and 5B show the swing element 4 in its neutral position wherein the slant section 2C of the rotary shaft 2 and the pivot shaft 3 lie on a common vertical plane, and the swing element 4 vertically extends along the central axis (the axis of the upright section 2A). With the swing element 4 in its neutral position, the slant section 2C may be directed toward the pivot shaft 3 (as shown by broken line in Fig. 4B) or the support shaft 6 (as shown by dash-and-dot line in Fig. 4B). In the following description, the term "initial position" is used to mean that the slant section 2C is directed toward the pivot shaft 3.

With the swing element 4 in its initial position, the rotary shaft 2 is rotated in a counterclockwise direction as seen in Figs. 4 and 5. This causes the slant section 2C to be pivoted to the right while the slant section 2C is slidably moved on and along the inner surface 4D of the sidewall 4B. As the angle of inclination of the slant section 2C gradually increases when seen in the axial direction of the pivot shaft 3, the swing element 4 is also gradually moved to the right. This movement causes the pivot shaft 3 to be rotated in a clockwise direction.

As shown in Fig. 4C, the swing element 4 reaches its rightmost position when the slant section 2C is oriented perpendicular to the pivot shaft 3. The swing element 4 is inclined at an angle equal to the angle α of inclination of the slant section 2C. Also, the pivot shaft 3 is pivoted clockwise at an angle equal to the angle α of inclination of the slant section 2C.

Further rotation of the rotary shaft 2 causes the slant section 2C to be moved toward its neutral position while the slant section 2C is slidably moved on and along the inner surface 4E of the sidewall 4C. The swing element 4 is gradually raised as the angle of inclination of the slant section 2C gradually decreases when seen in the axial direction of the pivot shaft 3. At this time, the pivot shaft 3 is rotated in a counterclockwise direction. The swing element 4 is returned to its neutral position when the slant section 2C is moved to the position shown by dash-and-dot line in Fig. 4B.

Further counterclockwise rotation of the rotary shaft 2 causes the swing element 4 to be rotated to the left, in a manner opposite to the manner in which the swing element 4 is rotated to the right. As the slant section 2C is inclined to the left, the swing element 4 is rotated to the right. This causes counterclockwise rotation of the pivot shaft 3. The swing element 4 is leftwardly inclined at the maximum angle (-α) when the slant section 2C reaches a position as shown in Fig. 4A. The maximum angle of swing motion of the pivot shaft 3 is also -α. The slant section 2C is thereafter moved back toward its initial position. This movement causes the swing element 4 to be moved to its upright position. Also, the pivot shaft 3 is rotated in a clockwise direction. When the slant section 2C is returned to its initial position, one cycle of operation is completed (the swing element is pivoted at a total angle of 160 degrees).

As thus far described, one revolution of the rotary shaft 2 causes the pivot shaft 3 to be pivoted from side to side at a total angel of 2 x α. The angle of swing motion of the pivot shaft 3 is equal to the angle α of inclination of the slant section 2C. The angle of swing motion of the pivot shaft 3 can thus be readily changed by increasing or decreasing the angle α of inclination of the slant section 2C. Advantageously, this arrangement allows the swing element 4 to be rotated through a wider range of swing motion. In the illustrated embodiment, the slant section 2C can be inclined at an angle of zero to 80 degrees. Also, the pivot shaft 3 can be pivoted at an angle of zero to 160 degrees.

Rotary motion of the rotary shaft 2 can be fully converted to swing motion of the pivot shaft 3 (or the swing element 4). This is because during rotation of the rotary shaft 2, the slant section 2C is kept in contact with either the inner surface 4D or the inner surface 4E of the swing element 4. This configuration substantially constantly imparts swing motion to the swing element 4 without any loss of power transmission. The present invention is thus able to effectively convert rotary motion to swing motion.

The mechanism 1 generally requires only three parts, namely, rotary shaft 2, pivot shaft 3 and swing element 4. Thus, the mechanism 1 is simple in structure, is easy to manufacture, is inexpensive, and provides high performance.

In the illustrated embodiment, the mechanism 1 is used to convert rotary to swing motion. Alternatively, the mechanism can be used to convert swing to rotary motion. It is also to be understood that after rotary motion of the rotary shaft 2 is converted to swing motion of the swing element 4, such swing motion can be transmitted not through the pivot shaft 3, but directly from the swing element to an article to be pivoted.

## Claims

1. A mechanism for converting rotary motion to swing motion, comprising:
a rotary shaft (2) having a central axis, said rotary shaft (2) being rotated in one direction about said central axis;
a pivot shaft (3) having an axis, said pivot shaft being rotated in alternate directions about said axis; and
a swing element (4) mounted to said pivot shaft (3),
said rotary shaft (2) including a slant section (2C) inclined relative to said central axis of said rotary shaft (2);
said swing element (2C) including a pair of confronting surfaces (4D, 4E), said slant section (2C) of said rotary shaft (2) being positioned between said pair of confronting surfaces (4D, 4E) of said swing element (4), **characterized in that** when said rotary shaft (2) is rotated, the slant section (2C) comes into contact with one of said pair of confronting surfaces (4D, 4E).

2. The mechanism of claim 1, wherein said slant section (2C) has a proximal end, said pivot shaft (3) is positioned in a side-by-side relation to said proximal end of said slant section (2C) and extends in a direction perpendicular to said central axis of said rotary shaft (2).

3. The mechanism of claims 1 or 2, wherein said slant section (2C) is positioned between the said pair of confronting surfaces (4D, 4E) of said swing element (4) with a slight clearance therebetween.

4. The mechanism of any one of claims 1 to 3, wherein said pair of confronting surfaces (4D, 4E) of said swing element(4) extend parallel to said slant section (2C) of said rotary shaft (2).

5. The mechanism of any one of claims 1 to 3, wherein said swing element (4) has a U-shaped section and includes a pair of confronting sidewalls (4B, 4C) in the form of a plate, a bottom wall (4A) and an opening (4F) defined in said bottom wall (4A), said slant section (2C) of said rotary shaft (2) being inserted through said opening (4F) and positioned between said pair of confronting sidewalls (4B, 4C).

6. The mechanism of claim 5, wherein said opening (4F) is defined substantially centrally in said bottom wall (4A) of said swing element (4).

7. The mechanism of claims 5 or 6, wherein said bottom wall (4A) of said swing element (4) extends in a direction perpendicular to said central axis of said rotary shaft (2).

8. The mechanism of any one of claims 5 to 7, further comprising a support shaft (6) extending in an coaxial relation to said pivot shaft (3), said pivot shaft (3) and said support shaft (6) being cooperative to support opposite sides of said bottom wall (4A) of said swing element (4).

9. The mechanism of claim 8, wherein said pivot shaft (3) and said support shaft (6) are secured within the bottom wall (4A) of said swing element (4).

## Patentansprüche

1. Mechanismus zum Umwandeln einer Drehbewegung in eine Schwingbewegung, umfassend:
einen Drehschaft (2) mit einer Mittelachse, wobei der Drehschaft (2) in einer Richtung um die Mittelachse gedreht wird;
einen Schwenkschaft (3) mit einer Achse, wobei der Schwenkschaft in abwechselnden Richtungen um die Achse gedreht wird; und
ein Schwingelement (4), das an dem Schwenkschaft (3) angebracht ist,
wobei der Drehschaft (2) einen Neigungsabschnitt (2C) beinhaltet, der relativ zu der Mittelachse des Drehschafts (2) geneigt ist;
das Schwingelement (2C) ein Paar gegenüberliegender Oberflächen (4D, 4E) beinhaltet und der Neigungsabschnitt (2C) des Drehschafts (2) zwischen dem Paar gegenüberliegender Oberflächen (4D, 4E) des Schwingelements (4) angeordnet ist, **dadurch gekennzeichnet, dass**, wenn der Drehschaft (2) gedreht wird, der Neigungsabschnitt (2C) mit einer des Paars gegenüberliegender Oberflächen (4D, 4E) in Kontakt kommt.

2. Mechanismus nach Anspruch 1, bei dem der Neigungsabschnitt (2C) ein proximales Ende aufweist, der Schwenkschaft (3) und das proximale Ende des Neigungsabschnitts (2C) nebeneinander angeordnet sind und sich der Schwenkschaft (3) in einer Richtung senkrecht zu der Mittelachse des Drehschafts (2) erstreckt.

3. Mechanismus nach Anspruch 1 oder 2, bei dem der Neigungsabschnitt (2C) zwischen dem Paar gegenüberliegender Oberflächen (4D, 4E) des Schwingelements (4) mit einem geringfügigen Freiraum dazwischen angeordnet ist.

4. Mechanismus nach einem der Ansprüche 1 bis 3, bei dem sich das Paar gegenüberliegender Oberflächen (4D, 4E) des Schwingelements (4) parallel zu dem Neigungsabschnitt (2C) des Drehschafts (2) erstreckt.

5. Mechanismzus nach einem der Ansprüche 1 bis 3, bei dem das Schwingelement (4) einen U-förmigen Abschnitt aufweist und ein Paar gegenüberliegender Seitenwände (4B, 4C) in der Form einer Platte, eine untere Wand (4A) und eine in der unteren Wand (4A) definierte Öffnung (4F) beinhaltet, wobei der Neigungsabschnitt (2C) des Drehschafts (2) durch die Öffnung (4F) eingeführt ist und zwischen dem Paar gegenüberliegender Seitenwände (4B, 4C) angeordnet ist.

6. Mechanismus nach Anspruch 5, bei dem die Öffnung (4F) im Wesentlichen mittig in der unteren Wand (4A) des Schwingelements (4) definiert ist.

7. Mechanismus nach Anspruch 5 oder 6, bei dem sich die untere Wand (4A) des Schwingelements (4) in einer Richtung senkrecht zu der Mittelachse des Drehschafts (2) erstreckt.

8. Mechanismus nach einem der Ansprüche 5 bis 7, der ferner einen Halteschaft (6) umfasst, der sich in einer koaxialen Beziehung zu dem Schwenkschaft (3) erstreckt, wobei der Schwenkschaft (3) und der Halteschaft (6) zusammenwirken, um gegenüberliegende Seitein der unteren Wand (4A) des Schwingelements (4) zu halten.

9. Mechanismus nach Anspruch 8, bei dem der Schwenkschaft (3) und der Halteschaft (6) innerhalb der unteren Wand (4A) des Schwingelements (4) befestigt sind.

## Revendications

1. Mécanisme pour convertir un mouvement de rotation en mouvement d'oscillation, comprenant :
un arbre rotatif (2) ayant un axe central, ledit arbre rotatif (2) étant tourné dans une seule direction autour dudit axe central ;
un arbre pivot (3) ayant un axe, ledit arbre pivot étant tourné dans des directions alternatives autour dudit axe ; et
un élément oscillant (4) monté sur ledit arbre pivot (3),
ledit arbre rotatif (2) incluant une section oblique (2C) inclinée par rapport audit axe central dudit arbre rotatif (2) ;
ledit élément oscillant (2C) comprenant une paire de surfaces opposées (4D, 4E), ladite section oblique (2C) dudit arbre rotatif (2) étant positionnée entre ladite paire de surfaces opposées (4D, 4E) dudit élément oscillant (4),
**caractérisé en ce que** pendant la rotation dudit arbre rotatif (2), la section oblique (2C) vient en contact avec une de ladite paire de surfaces opposées (4D, 4E).

2. Mécanisme selon la revendication 1, dans lequel ladite section oblique (2C) a une extrémité proximale, ledit arbre pivot (3) est positionné dans une relation juxtaposée à ladite extrémité proximale de ladite section oblique (2C) et s'étend dans une direction perpendiculaire audit axe central dudit arbre rotatif (2).

3. Mécanisme selon la revendication 1 ou 2, dans lequel ladite section oblique (2C) est positionnée entre ladite paire de surfaces opposées (4D, 4E) dudit élément oscillant (4) avec un léger espacement entre elles.

4. Mécanisme selon l'une quelconque des revendications 1 à 3, dans lequel ladite paire de surfaces opposées (4D, 4E) dudit élément oscillant (4) s'étend parallèlement à ladite section oblique (2C) dudit arbre rotatif (2).

5. Mécanisme selon l'une quelconque des revendications 1 à 3, dans lequel ledit élément oscillant (4) a une section en U et comprend une paire de parois latérales opposées (4B, 4C) sous la forme d'une plaque, une paroi inférieure (4A) et une ouverture (4F) définie dans ladite paroi inférieure (4A), ladite section oblique (2C) dudit arbre rotatif (2) étant insérée à travers ladite ouverture (4F) et positionnée entre ladite paire de parois latérales opposées (4B, 4C).

6. Mécanisme selon la revendication 5, dans lequel ladite ouverture (4F) est définie de façon sensiblement centrale dans ladite paroi inférieure (4A) dudit élément oscillant (4).

7. Mécanisme selon la revendication 5 ou 6, dans lequel ladite paroi inférieure (4A) dudit élément oscillant (4) s'étend dans une direction perpendiculaire audit axe central dudit arbre rotatif (2).

8. Mécanisme selon l'une quelconque des revendications 5 à 7, comprenant en outre un arbre de support (6) s'étendant dans une relation coaxiale avec ledit arbre pivot (3), ledit arbre pivot (3) et ledit arbre de support (6) coopérant pour supporter les côtés opposés de ladite paroi inférieure (4A) dudit élément oscillant (4).

9. Mécanisme selon la revendication 8, dans lequel ledit arbre pivot (3) et ledit arbre de support (6) sont fixés à l'intérieur de la paroi inférieure (4A) dudit élément oscillant (4).
